# EUROPEAN PATENT SPECIFICATION

(11) **EP 3 575 220 B1**
(45) Date of publication and mention of the grant of the patent: **07.04.2021**
(21) Application number: 18382374.9
(22) Date of filing: 31.05.2018
(51) Int. Cl.: B64D 37/22, B64D 37/06

(54) **AN AIRCRAFT FUEL TANK SYSTEM**
FLUGZEUGKRAFTSTOFFTANKSYSTEM
SYSTÈME DE RÉSERVOIR DE CARBURANT D'AÉRONEF

(43) Date of publication of application: 04.12.2019
(73) Proprietor: Airbus Operations, S.L., 28906 Getafe (ES)
(72) Inventor: Ballestero Mendez, Jorge, 28906 Getafe (ES); Piñeyroa de la Fuente, Eugenio, 28906 Getafe (ES)

(56) References cited:
- EP-A1- 2 977 846
- EP-A1- 3 165 466
- EP-A1- 3 199 459
- GB-A- 801 098
- GB-A- 2 544 745
- US-A1- 2005 166 967
- US-A1- 2014 144 917

## Description

### Object of the invention

The present invention refers to an aircraft fuel tank system that reduces the amount of fuel that is not reached and sucked out by fuel pumps. This amount of fuel will be referred as unpumpable fuel.

One object of the invention is to provide a fuel tank system adapted to minimize the quantity of unpumpable fuel that gets accumulated without ever being used. According to this, it is also an object of the invention to reduce weight that is finally levied on the aircraft operator in terms of range, payload or passengers caused by this unpumpable fuel.

Another object of the invention is to provide a fuel tank system that entails minimal modifications and impact on the surrounding structure of a traditional fuel tank, to thus provide a feasible, simple and cost-effective way of saving stored fuel for same range.

Another object of the invention is to facilitate the maintenance, inspection and repair tasks in the fuel tanks of an aircraft.

### Background of the invention

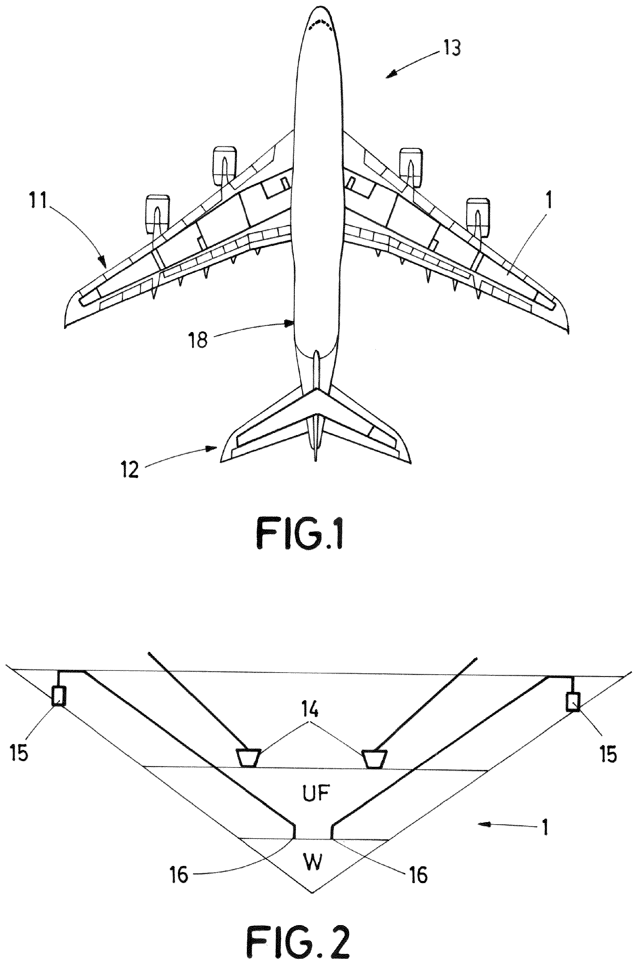

The fuel in an aircraft is stored in several tanks. As shown in Figure 1, an aircraft (13) may hold fuel tanks (1) inside the wing (11), the fuselage (18), and the Horizontal Tail Plane (HTP) (12). Each one of these fuel tanks, either in the wing, the fuselage or the tail, have some specific valves to transfer the fuel to the engines, to generate thrust, or to between the different interconnected fuel tanks, to control the centre of gravity position or alleviate the wing loads during the different flight phases (i.e. climb, cruise, descent, etc.). However, distributed volumes of unpumpable fuel get accumulated as being unreachable by the suction ports that suck fuel toward said valves.

In latest aircraft designs, the amount of unpumpable fuel is reduced significantly by optimizing the location of the fuel pump suction ports. However, this optimization still leaves unpumpable fuel accumulated in the tank.

In the aircraft designs where the fuel pump suction ports cannot be optimized, some satellite suction ports have been added to the original ports, and some redesign of the shape of the suction port itself has been implemented. All these changes enable a reduction of the unpumpable fuel volume.

The internal volume of aircraft fuel tanks deals with the following constrains:
- the wing, HTP and fuselage external loft,
- the internal structural elements like skins, stringers, ribs, fittings, supports, frames etc. that provides the space where the fuel is stored,
- the location of the fuel pumps, the suction ports and the pick-up points,
- the location and routing of the fuel pipes,
- others constrains related to the surrounding fuel probes, man-holes, etc.

Taking into account all these constrains, every single fuel tank accumulates a minimum level of fuel that fuel pumps are not able to reach and suck out, leading to a minimum quantity of fuel volume inside of the fuel tank that cannot be used.

Figure 2 shows an example of an aircraft fuel tank (1) that includes some of the above mentioned constrains leading to an accumulation of unpumpable fuel (UF). As shown, although the fuel tank (1) is provided with suction ports (14) for sucking fuel, and water valves (15) connected to pick-up points (16) to drain the water trapped under the fuel, water (W) and fuel (UF) got accumulated in the tank (1).

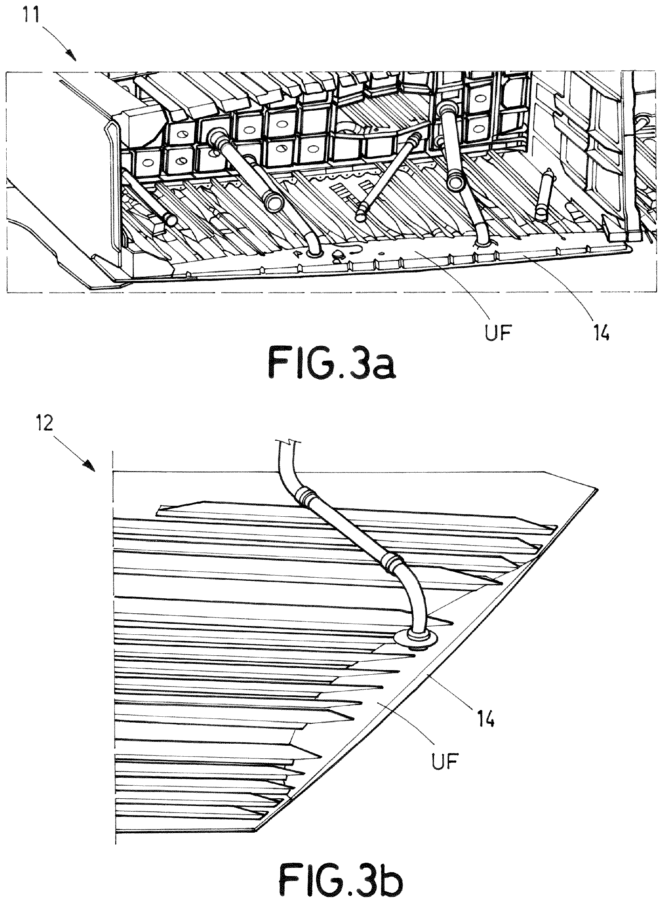

For better clarification, Figure 3a and 3b respectively shows the zones of unpumpable fuel (UF) inside the fuel tanks (1) of a wing (11) and of an HTP (12) in a detailed view.

The weight of the UF is included in the aircraft Standard Empty Weight, turning out in a penalty for the aircraft operator usage in terms of range, payload or passengers.

It would therefore be desirable to provide technical means that minimize the quantity of unpumpable fuel to reduce the weight penalty associated to this unusable fuel.

GB2544745A describes an aircraft fuel system comprising: a fuel tank; an outlet in the fuel tank for feeding liquid fuel out of the fuel tank; and an expandable gas-container in the fuel tank. The gas-container encloses a mass of gas which is sealed within the gas-container; the gas-container is exposed to ambient pressure and the weight of the head of fuel above the gas-container. A drop in ambient pressure and the weight of fuel during flight of the aircraft causes the gas-container to expand. The expansion of the gas-container causes it to displace the liquid fuel towards the outlet. The mass of gas is a fixed mass of gas - thus the amount of gas in the gas-container does not change as the gas-container expands and its pressure decreases in inverse proportion to the change of volume.

EP3199459A1 describes an aircraft fuel system has a bottom wall, and a rib with a bottom edge joined to the bottom wall. The rib provides a boundary between first and second compartments, and at least the first compartment is arranged to carry fuel when the system is in use. An open recess is located in the bottom edge of the rib, and a rib sealing arrangement between the bottom edge of the rib and the bottom wall prevents fuel from flowing across the bottom edge of the rib except at the open recess. The system has a pump and a conduit coupled at one end to the open recess and at another end to the pump, the open recess and the conduit together providing a flow path for fuel to flow across the bottom edge of the rib from the first compartment into the pump. The flow path is sealed so that the fuel flowing along the flow path is prevented from flowing out of the flow path into the second compartment.

### Summary of the invention

The present invention overcomes the above mentioned drawbacks by providing an aircraft fuel tank system that avoids that umpumpable fuel gets accumulated in the tank, saving weight, and entailing minimal modifications in conventional fuel tanks.

The present invention refers to an aircraft fuel tank system according to claim 1 that comprises at least one aircraft fuel tank for holding and supplying fuel to the engines of the aircraft, and a filling element to be mounted on said fuel tank.

The fuel tank has an outer surface shaped with an aerodynamic profile that comprises a curved lowermost section holding a volume where fuel can accumulate. The fuel tank further comprises at least one aircraft structure to stiffen said tank.

The filling element is mounted on an inner surface of the curved lowermost section, and is attached to the at least one aircraft structure. The filling element has a lower surface shaped with the inner surface of the curved lowermost section, and an opposite upper surface that is configured to fulfill the volume hold by the curved lowermost section, such that a substantially plain low internal surface is defined on the aircraft fuel tank in order to avoid the accumulation of fuel.

By mounting a filling element with such configuration on the lowermost section of the fuel tank the volume of unpumpable fuel is occupied, avoiding that fuel can accumulate there.

Along with a reduction in cost, a weight reduction can also be obtained provided that the filling element has a lighter weight than the volume of fuel replaced. Thus, an increase in the usage of the operator aircraft in terms of range, payload or passengers can be achieved.

Moreover, the aircraft fuel tank system of the invention is valid for any type of aircraft fuel tank and requires minor adaptations in traditional tanks. Thus, the proposed solution can be easily retrofitted and adapted to existing fleet of aircrafts with minor modifications in their structure.

Further, the filling element can be easily installed and uninstalled, so maintenance, inspection and repair tasks are also facilitated.

### Brief description of the drawings

For a better comprehension of the invention, the following drawings are provided for illustrative and non-limiting purposes, wherein:
Figure 1 shows a top view of an aircraft where the locations of the fuel tanks in the wings and the Horizontal Tail Plane are depicted.
Figure 2 shows a conventional fuel tank in which water gets trapped under fuel although being provided with pump suction ports for the extraction of fuel, and pipes and drain valves for the extraction of water.
Figures 3a-3b show areas of a fuel tank in a wing (Figure 3a) and an Horizontal Tail Plane (Figure 3b) where unpumpable fuel (UF) gets accumulated.
Figures 4a-4c show different views of the aircraft fuel tank system according to a preferred embodiment. Figure 4a shows an overview of the aircraft fuel tank system. Figure 4b shows a perspective view in detail. Figure 4c shows a top view in detail.
Figures 5a-5c show different views of the filling element according to a preferred embodiment. Figure 5a shows a perspective view of the filling element. Figure 5b shows a top view. Figure 5c shows a cross-sectional view along the plane A-A' depicted in Figure 5b.
Figure 6 shows a detailed view of the attachment of the filling element to the aircraft structure.

### Preferred embodiments of the invention

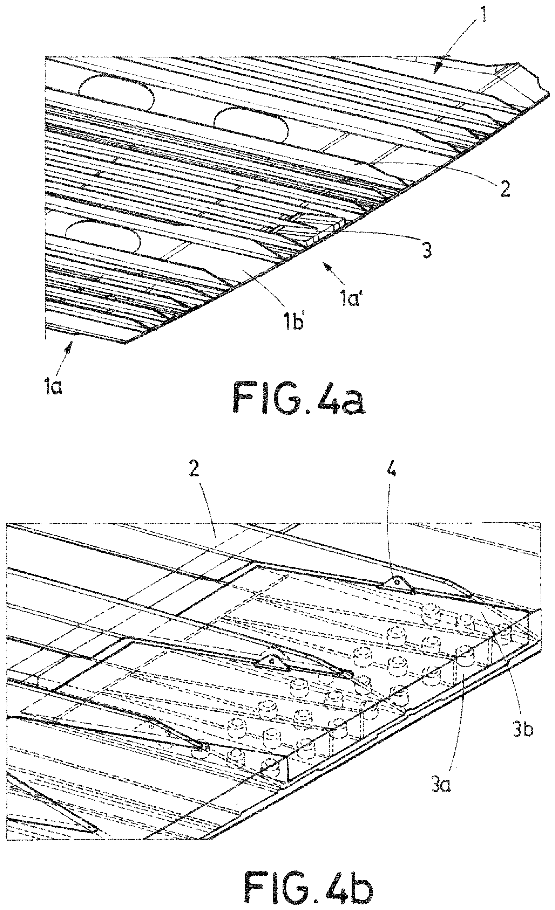

Figures 4a-4c show an aircraft fuel tank system that comprises an aircraft fuel tank (1) and a filling element (3), the fuel tank (1) comprising at least one aircraft structure (2) to stiffen the same. This structure (2) preferably consists of a stringer, but alternatively it could also consist of a rib, a spar or a frame.

The fuel tank (1) has an outer surface (1a) shaped with an aerodynamic profile, and comprises a curved lowermost section (1a') holding a volume where fuel can accumulate. The filling element (3) is mounted on the inner surface (1b') of said curved lowermost section (1a') to occupy this volume and avoid that fuel gets accumulated. With this purpose, the filling element (3) is designed having a lower surface (3a) shaped with the inner surface (1b') of the curved lowermost section (1a'), and an opposite upper surface (3b) fulfilling the volume hold by the curved lowermost section (1a'). This configuration matches the internal surface (1b') of the curved lowermost section (1a') and defines a substantially plain low internal surface on the aircraft fuel tank (1).

As shown in Figures 4a-4c the filling element (3) may be attached to several structures (2). In this preferred embodiment, these structures (2) consist of stringers, and the filling element (3) is attached to the run-out portion of these stringers, which are placed in the lowermost section (1a') of the fuel tank. As better shown in Figure 4b, the skin dihedral angle of this fuel tank leaves the filling element (3) with a ramped body configuration to thus define a substantially plain low internal surface in the tank.

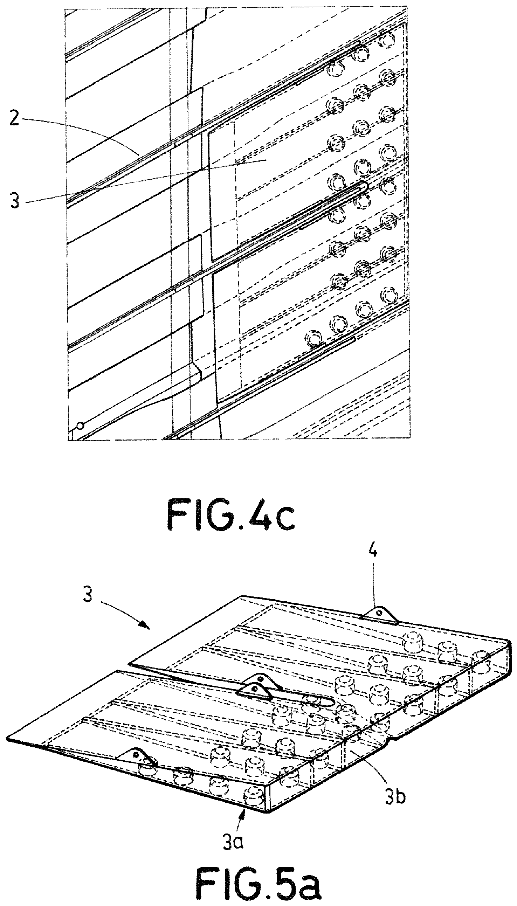

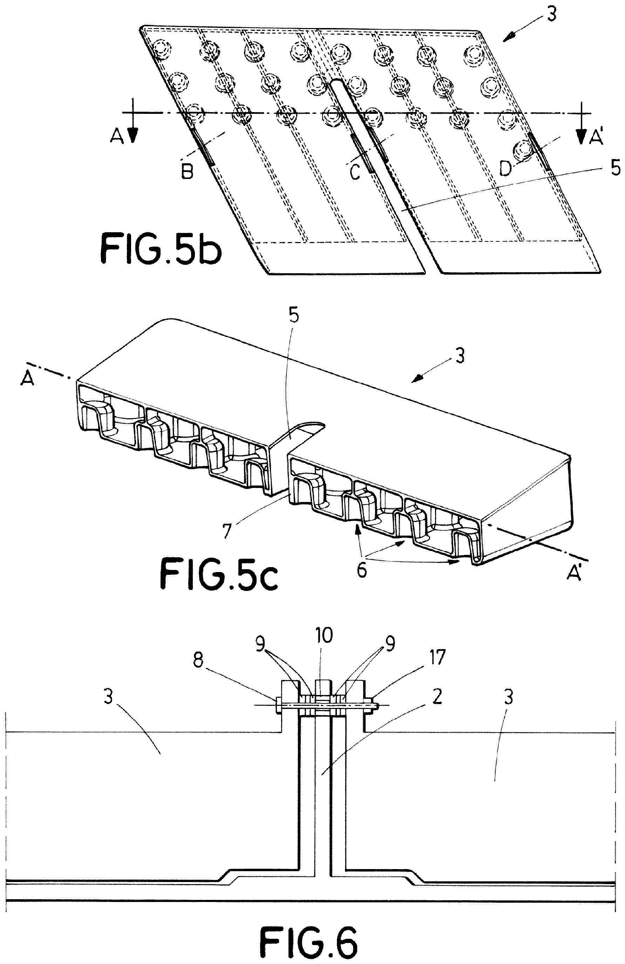

Figures 5a-5c show different views of a filling element (3). As shown in Figure 5a, and according to another preferred embodiment, the upper surface (3b) of the filling element (3) comprises at least four misaligned fittings (4) located at extremes of said upper surface (3b), giving rise to three misaligned axes as shown in figure 5b, to prevent the filling element (3) from rotating and lifting when attached to the aircraft structure (2). As fail-safe concept, the filling element (3) preferably has four fittings (4) to avoid any possible movement of the same in case of failure of one of them.

Preferably, fittings (4) will be configured as lugs to enable the mechanical installation of the filling element (3) and ensure that the parts will remain at the right location during all the flight conditions.

As shown in Figures 4 and 5 and according to another preferred embodiment, the filling element (3) comprises at least one groove (5) extended along a longitudinal direction to receive the aircraft structure (2).

Preferably, as shown in Figures 5a and 5b, a second pair of misaligned fittings (4) is placed at each side of the groove (5) to provide more fixation points and avoid any possible movement of the same, in case of failure of one of them.

Figure 5b shows a top view of the filling element (3), and Figure 5c a cross-sectional view along the plane A-A' depicted in Figure 5b. Figure 5b shows the misalignment in the fittings (4) where different rotation axes B, C and D prevent the filling element (3) from rotating and lifting when attached to an aircraft structure and in case of failure of one of them.

As shown in Figure 5c, the lower surface (3a) of the filling element (3) comprises a plurality of chambers or cavities (6) with rigidized walls (7), the cavities (6) being designed to accommodate abutments of the inner surface (1b') of the curved lowermost section (1a'). The design of this filling element (3) is basically a hollow part with internal stiffeners and chambers/cavities, giving stiffness and strength to the element matching as much as possible the 3D volume between the theoretical volume of the unpumpable fuel and the surrounding structure. With this configuration, the filling element may both save weight and improve its matching with the inner surface of the fuel tank.

The cavities (6) incorporated in the filling element (3) can be extended along part or all the height of the element to avoid the clash and enable the installation of the filling element (3) over positions with structural fasteners, such as above joints between covers and rib shear-ties or tri-form fittings.

According to another preferred embodiment, the filling element (3) has a flat lower surface (3a) to ease the manufacturing of the element.

According to another preferred embodiment, the filling element (3) will be obtained from an additive manufacturing process or from injection moulding techniques. These manufacturing techniques help to fulfil the following design considerations for the filling element:
- environmental requirements: good chemical resistance to fuel and hydraulic fluids,
- temperature requirements: range of working temperature from -55ºC to 70ºC,
- pressure requirements: delta pressure generated between the fuel tank pressure and the filling element internal pressure (1 atm) during all the flight conditions,
- geometrical requirements: filling element maximum size limited by the accessibility constrains like the dimensions of man-holes and rib shear-web holes,
- installation requirements: simple, easy and fast mechanical installation and deinstallation concept with minimum impact on the structure:
   - no penalty in critical reserve factors,
   - no damage of either metallic or composite structural parts,
   - weight requirements: light material with enough mechanical properties to meet the temperature, pressure and environmental requirements.

Figure 6 shows a detailed view of the attachment of a filling element (3) to an aircraft structure (2), which in this particular case consists of a stringer web. As shown, and according to another preferred embodiment, the fuel tank system further comprises fasteners (8), washers (9), and bushings (10).

Fasteners (8) are used in the installation of the filling element (3) to the aircraft structure (2) to pass through previously drilled holes in the stringer web. These drilled holes in the stringers are the structural modification that is required to enable the filling element (3) installation.

Furthermore, to ensure that no damage is caused in the aircraft structure (2) (stringer web), polymeric -preferably, elastomeric- bushings (10) and/or polymeric washers (9) can be used as protection. This way, drilled holes in the stringer web will be protected by the bushings (10), and both the faces of the stringer web and the filling element side near to the stringer web will be protected by the washers (9).

By doing so, any damage from vertical or bending loads generated by the filling element (3) in the structure (2) would be prevented.

The final number of washers (9) to be assembled will depend on the total tolerances required at each specific position.

Finally, for easing the installation/removal of the filling element (3) and secure its fixation to the aircraft structure (2), a self-locking nut (17) can be mounted on the fasteners (8).

## Claims

1. An aircraft fuel tank system, comprising:
- at least one aircraft fuel tank (1) for holding and supplying fuel to the engines of the aircraft, said fuel tank (1) having an outer surface (1a) shaped with an aerodynamic profile and comprising a curved lowermost section (1a') holding a volume where fuel can accumulate, the tank (1) further comprising at least one aircraft structure (2) to stiffen said tank (1),
- and, a filling element (3) attached to the at least one aircraft structure (2) and mounted on an inner surface (1b') of the curved lowermost section (1a') to occupy the volume defined by said curved lowermost section (1a') to avoid that fuel gets accumulated,
- **characterized in that** the filling element (3) has a lower surface (3a) comprising a plurality of cavities (6) with rigidized walls (7), the cavities (6) being designed to accommodate abutments of the inner surface (1b') of the curved lowermost section (1a').

2. An aircraft fuel tank system, according to claim 1, wherein the upper surface (3b) of the filling element (3) comprises at least four misaligned fittings (4) for the attachment of the filling element (3) to the at least one aircraft structure (2), and wherein said at least four misaligned fittings (4) are located at extremes of the upper surface (3b) to prevent the filling element (3) from rotating and lifting.

3. An aircraft fuel tank system, according to claim 2, wherein the fittings (4) consist of perforated lugs adapted to receive fasteners (8) to securely fix the filling element (3) to the aircraft structure (2).

4. An aircraft fuel tank system, according to any of the preceding claims, wherein the filling element (3) comprises a groove (5) extended along a longitudinal direction, and configured to receive the aircraft structure (2) for its attachment.

5. An aircraft fuel tank system, according to any of claims 2 to 4, further comprising fasteners (8) attaching the filling element (3) to the aircraft structure (2) via the fittings (4), washers (9) mounted between the fittings (4) and the aircraft structure (2), and bushings (10) mounted in the aircraft structure (2) to fix the fastener (8) to the aircraft structure (2).

6. An aircraft fuel tank system, according to claim 5, wherein the washers (9) and/or the bushings (10) are of polymeric material to provide adjustable fixation.

7. An aircraft fuel tank system, according to any of the preceding claims, wherein the fuel tank (1) is located on a wing (11) and/or on an horizontal tail plane (12), and/or on the fuselage (18) of an aircraft (13).

8. An aircraft fuel tank system, according to any of the preceding claims, wherein the aircraft structure (2) consists of a stringer.

9. An aircraft fuel tank system, according to any of the preceding claims, wherein the filling element (3) has a flat lower surface (3a).

10. An aircraft fuel tank system, according to any of the preceding claims, wherein the filling element (3) is obtained from an additive manufacturing process or injection moulding.

11. An aircraft (13) comprising an aircraft fuel tank system according to any of claims 1-10.

## Patentansprüche

1. Flugzeugkraftstofftanksystem, das Folgendes umfasst:
- zumindest einen Flugzeugkraftstofftank (1) zum Halten und Zuführen von Kraftstoff zu Kraftmaschinen des Flugzeugs, wobei der Kraftstofftank (1) eine Außenoberfläche (1a) aufweist, die mit einem aerodynamischen Profil geformt ist und einen gekrümmten untersten Abschnitt (1a') umfasst, der ein Volumen hält, in dem sich Kraftstoff sammeln kann, wobei der Tank (1) ferner zumindest eine Flugzeugstruktur (2) zum Versteifen des Tanks (1) umfasst, und
- ein Füllelement (3), befestigt an der zumindest einen Flugzeugstruktur (2) und montiert an einer Innenoberfläche (1b') des gekrümmten untersten Abschnitts (1a') zum Belegen des durch den gekrümmten untersten Abschnitt (1a') definierten Volumens, um zu verhindern, dass sich Kraftstoff ansammelt,
- **dadurch gekennzeichnet, dass** das Füllelement (3) eine untere Oberfläche (3a) aufweist, umfassend mehrere Hohlräume (6) mit versteiften Wänden (7), wobei die Hohlräume (6) dazu ausgestaltet sind, Widerlager an der Innenoberfläche (1b') des gekrümmten untersten Abschnitts (1a') aufzunehmen.

2. Flugzeugkraftstofftanksystem nach Anspruch 1, wobei die obere Oberfläche (3b) des Füllelements (3) mindestens vier nicht ausgerichtete Anschlussstücke (4) für die Befestigung des Füllelements (3) an der zumindest einen Flugzeugstruktur (2) umfasst, und wobei die mindestens vier nicht ausgerichteten Anschlussstücke (4) an Rändern der oberen Oberfläche (3b) befindlich sind, um zu verhindern, dass das Füllelement (3) gedreht oder angehoben wird.

3. Flugzeugkraftstofftanksystem nach Anspruch 2, wobei die Anschlussstücke (4) aus perforierten Ansätzen bestehen, die dazu angepasst sind, Befestigungselemente (8) aufzunehmen, um das Füllelement (3) sicher an der Flugzeugstruktur (2) zu befestigen.

4. Flugzeugkraftstofftanksystem nach einem der vorhergehenden Ansprüche, wobei das Füllelement (3) eine Nut (5) umfasst, die sich entlang einer Längsrichtung erstreckt und dazu ausgelegt ist, die Flugzeugstruktur (2) zu ihrer Befestigung aufzunehmen.

5. Flugzeugkraftstofftanksystem nach einem der Ansprüche 2 bis 4, ferner umfassend Befestigungselemente (8), die das Füllelement (3) über die Anschlussstücke (4) an der Flugzeugstruktur (2) befestigen, Beilegscheiben (9), die zwischen den Anschlussstücken (4) und der Flugzeugstruktur (2) montiert sind, und Buchsen (10), die in der Flugzeugstruktur (2) montiert sind, um das Befestigungselement (8) an der Flugzeugstruktur (2) zu befestigen.

6. Flugzeugkraftstofftanksystem nach Anspruch 5, wobei die Beilegscheiben (9) und/oder die Buchsen (10) aus polymerem Material bestehen, um eine einstellbare Befestigung zu ermöglichen.

7. Flugzeugkraftstofftanksystem nach einem der vorhergehenden Ansprüche, wobei der Kraftstofftank (1) an einem Flügel (11) und/oder an einem Höhenleitwerk (12) und/oder am Rumpf (18) eines Flugzeugs (13) befindlich ist.

8. Flugzeugkraftstofftanksystem nach einem der vorhergehenden Ansprüche, wobei die Flugzeugstruktur (2) aus einem Stringer besteht.

9. Flugzeugkraftstofftanksystem nach einem der vorhergehenden Ansprüche, wobei das Füllelement (3) eine flache untere Oberfläche (3a) aufweist.

10. Flugzeugkraftstofftanksystem nach einem der vorhergehenden Ansprüche, wobei das Füllelement (3) durch einen additiven Fertigungsprozess oder durch Spritzgießen erhalten wird.

11. Flugzeug (13), umfassend ein Flugzeugkraftstofftanksystem nach einem der Ansprüche 1-10.

## Revendications

1. Système de réservoir à carburant d'aéronef, comprenant :
- au moins un réservoir à carburant d'aéronef (1) pour contenir et fournir un carburant aux moteurs de l'aéronef, ledit réservoir à carburant (1) ayant une surface extérieure (1a) formée avec un profil aérodynamique et comprenant une section la plus basse incurvée (1a') contenant un volume où un carburant peut s'accumuler, le réservoir (1) comprenant en outre au moins une structure d'aéronef (2) pour renforcer ledit réservoir (1),
- et, un élément de remplissage (3) attaché à l'au moins une structure d'aéronef (2) et monté sur une surface intérieure (1b') de la section la plus basse incurvée (1a') pour occuper le volume défini par ladite section la plus basse incurvée (1a') pour éviter que du carburant soit accumulé,
- **caractérisé en ce que** l'élément de remplissage (3) a une surface inférieure (3a) comprenant une pluralité de cavités (6) avec des parois rigidifiées (7), les cavités (6) étant conçues pour accueillir des butées de la surface intérieure (1b') de la section la plus basse incurvée (1a').

2. Système de réservoir à carburant d'aéronef, selon la revendication 1, dans lequel la surface supérieure (3b) de l'élément de remplissage (3) comprend au moins quatre raccords désalignés (4) pour l'attache de l'élément de remplissage (3) à l'au moins une structure d'aéronef (2), et dans lequel lesdits au moins quatre raccords désalignés (4) sont situés à des extrêmes de la surface supérieure (3b) pour empêcher l'élément de remplissage (3) d'entrer en rotation et de se lever.

3. Système de réservoir à carburant d'aéronef, selon la revendication 2, dans lequel les raccords (4) sont constitués d'ergots perforés adaptés pour recevoir des dispositifs de fixation (8) pour fixer fermement l'élément de remplissage (3) à la structure d'aéronef (2).

4. Système de réservoir à carburant d'aéronef, selon l'une quelconque des revendications précédentes, dans lequel l'élément de remplissage (3) comprend une rainure (5) étendue le long d'une direction longitudinale, et configurée pour recevoir la structure d'aéronef (2) pour son attache.

5. Système de réservoir à carburant d'aéronef, selon l'une quelconque des revendications 2 à 4, comprenant en outre des dispositifs de fixation (8) attachant l'élément de remplissage (3) à la structure d'aéronef (2) par l'intermédiaire des raccords (4), des rondelles (9) montées entre les raccords (4) et la structure d'aéronef (2), et des douilles (10) montées dans la structure d'aéronef (2) pour fixer la dispositif de fixation (8) à la structure d'aéronef (2).

6. Système de réservoir à carburant d'aéronef, selon la revendication 5, dans lequel les rondelles (9) et/ou les douilles (10) sont de matériau polymère pour fournir une fixation ajustable.

7. Système de réservoir à carburant d'aéronef, selon l'une quelconque des revendications précédentes, dans lequel le réservoir à carburant (1) est situé sur une aile (11) et/ou sur un empennage horizontal (12), et/ou sur le fuselage (18) d'un aéronef (13).

8. Système de réservoir à carburant d'aéronef, selon l'une quelconque des revendications précédentes, dans lequel la structure d'aéronef (2) est constituée d'une lisse.

9. Système de réservoir à carburant d'aéronef, selon l'une quelconque des revendications précédentes, dans lequel l'élément de remplissage (3) a une surface inférieure plate (3a).

10. Système de réservoir à carburant d'aéronef, selon l'une quelconque des revendications précédentes, dans lequel l'élément de remplissage (3) est obtenu à partir d'un procédé de fabrication additive ou de moulage par injection.

11. Aéronef (13), comprenant un système de réservoir à carburant d'aéronef selon l'une quelconque des revendications 1 à 10.
